(19) Europäisches Patentamt
European Patent Office
Office européen des brevets

(11) **EP 3 076 334 A1**

(12) **EUROPEAN PATENT APPLICATION**

(43) Date of publication:
05.10.2016 Bulletin 2016/40

(21) Application number: 16157817.4

(22) Date of filing: 29.02.2016

(51) Int Cl.:
*G06K 9/00* (2006.01)     *G06T 7/00* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2015 JP 2015074174

(71) Applicant: FUJITSU LIMITED
Kawasaki-shi
Kanagawa 211-8588 (JP)

(72) Inventor: Aoki, Takahiro
Kanagawa, 211-8588 (JP)

(74) Representative: Hoffmann Eitle
Patent- und Rechtsanwälte PartmbB
Arabellastraße 30
81925 München (DE)

(54) **IMAGE ANALYZING APPARATUS AND IMAGE ANALYZING METHOD**

(57)    An image analyzing apparatus in accordance with an aspect includes a display, a camera, an estimating unit, an establishing unit, a guidance unit, and a display controlling unit. The camera shoots an image of a subject located in front of the display. The estimating unit estimates a shape and position of the subject whose image has been shot by the camera. The establishing unit establishes a display region on the display according to the shape and position of the subject. The guidance unit calculates a guidance direction for the subject according to the shape and position of the subject. The display control unit displays on the display region a guidance instruction that is based on the guidance direction.

FIG. 1

**Description**

FIELD

The embodiments discussed herein are related to an image analyzing apparatus and an image analyzing method.

BACKGROUND

A palm vein authentication apparatus is, for example, an apparatus that authenticates a person by shooting an image of a intravital vein pattern using near infrared rays. Such an apparatus includes an image analyzing apparatus that shoots and analyzes an image of an authentication target.

As an apparatus related to the image analyzing apparatus, an image processing apparatus is known, as an example, that includes a first image obtaining unit and an image merging unit, and such an image processing apparatus applies some processing to predetermined images. In the image processing apparatus, the first image obtaining unit obtains a first image. The image merging unit obtains a second image and merges the obtained second image with the first image obtained by the first image obtaining unit. The image merging unit detects a first region meeting a predetermined standard within the first image obtained by the first image obtaining unit, and superimposes the second image onto a region close to the detected first region, thereby generating a third image obtained by merging the first and second images with each other (see, for example, patent document 1).

Another known technique is a displaying method for displaying an icon at a position allowing an easy operation of a user shooting an image with, for example, a portable information terminal. The portable information terminal detects positions at which the terminal is held by the user's hand according to detection results provided by a plurality of touch sensors disposed on at least one of the back face or side face of a housing. The portable information terminal recognizes the orientation of the user' s face from an image shot by a built-in camera. According to the detected positions and the recognized orientation of the face, the portable information terminal estimates a holding state that includes information indicating which hand is holding the portable information terminal. According to the estimated holding state, the portable information terminal determines a position on a touch panel at which an icon should be displayed so that the user can readily operate the terminal under the current holding state (see, for example, patent document 2).

Patent document 1: Japanese Laid-open Patent Publication No. 2011-228913
Patent document 2: Japanese Laid-open Patent Publication No. 2013-222322

SUMMARY

In one facet, an object of the present invention is to allow even an image analyzing apparatus with a relatively small screen to reliably report an instruction associated with image analysis to a user.

An image analyzing apparatus in accordance with an aspect includes a display, a camera, an estimating unit, an establishing unit, a guidance unit, and a display controlling unit. The camera shoots an image of a subject located in front of the display. The estimating unit estimates a shape and position of the subject whose image has been shot by the camera. The establishing unit establishes a display region on the display according to the shape and position of the subj ect. The guidance unit calculates a guidance direction for the subject according to the shape and position of the subject. The display control unit displays on the display region a guidance instruction that is based on the guidance direction.

BRIEF DESCRIPTION OF DRAWINGS

FIG. 1 illustrates an exemplary configuration of an image analyzing apparatus in accordance with a first embodiment;
FIG. 2 illustrates an example of the conducting of palm vein authentication;
FIG. 3 illustrates an example of a visually checkable region in accordance with the first embodiment;
FIG. 4 illustrates another example of a visually checkable region in accordance with the first embodiment;
FIG. 5 illustrates an example of an authentication range table that indicates a predetermined authentication range in accordance with the first embodiment;
FIG. 6 illustrates an example of a guidance screen in accordance with the first embodiment;
FIG. 7 is a flowchart illustrating a biometric authentication method that relies on an image authenticating apparatus in accordance with the first embodiment;

FIG. 8 is a flowchart illustrating a visual-check-performability determining process in accordance with the first embodiment;

FIG. 9 illustrates an exemplary configuration of an image analyzing apparatus in accordance with a second embodiment;

FIG. 10 illustrates an example of calculation of a visually checkable region after guidance in accordance with the second embodiment; and

FIG. 11 is a flowchart illustrating an example of a post-guidance screen displaying process in accordance with the second embodiment.

DESCRIPTION OF EMBODIMENTS

The following problem will occur if a palm vein authenticating apparatus is installed on an apparatus with a relatively small screen in comparison with a desktop computer or a notebook-sized personal computer, e.g., a portable information terminal apparatus or a multifunctional portable telephone. That is, a problem will occur in which a palm could possibly hide a displayed item from view when the palm is held over a camera to shoot an image of the palm. If a displayed item is hidden from view, it will become difficult to properly give the user an instruction to change the position and/or height of the hand for shooting an image for authentication, thereby decreasing the usability.

In one facet, an object of the present invention is to allow even an image analyzing apparatus with a relatively small screen to readily report an instruction associated with image analysis to a user.

(First Embodiment)

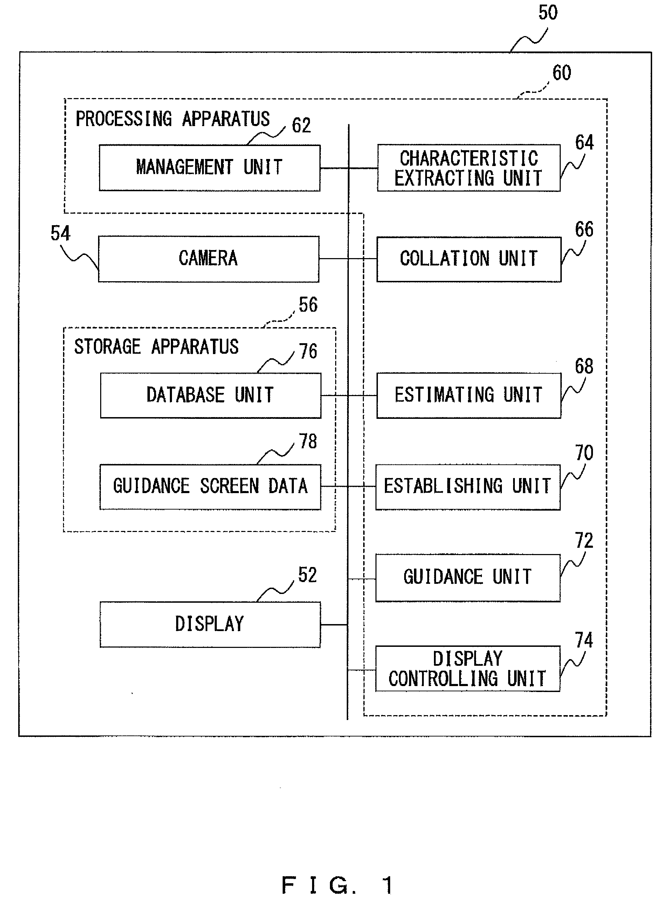

With reference to the drawings, the following will describe an image analyzing apparatus 50 in accordance with a first embodiment. FIG. 1 illustrates an exemplary configuration of the image analyzing apparatus 50 in accordance with the first embodiment. As depicted in FIG. 1, the image analyzing apparatus 50 includes a display 52, a camera 54, a processing apparatus 60, and a storage apparatus 56. The image analyzing apparatus 50 includes a function that serves as a biometric authentication apparatus. For example, a portable information terminal apparatus, a multifunctional portable telephone, or the like may be used as the image analyzing apparatus 50. In this case, the image analyzing apparatus 50 is equipped with a communication function or the like, and the function for allowing the image analyzing apparatus 50 to serve as a biometric authentication apparatus is illustrated.

The display 52 is a display apparatus that displays information, and is, for example, a liquid crystal display apparatus. Under the control of the processing apparatus 60, the display 52 displays a predetermined image. The display 52 may include a touch panel. When the display 52 includes a touch panel, the display 52 displays a predetermined image under the control of the processing apparatus 60 and senses touch on the touch panel. When touch on a portion corresponding to an item displayed on the screen is sensed, the display 52 outputs information corresponding to a position on the screen for the sensed touch.

The camera 54 is an image shooting apparatus and may include a luminaire in addition to an imager. In the present embodiment, the camera 54 shoots an image of a subject for which biometric authentication is to be conducted. The camera 54 shoots an image of a subject located in front of the display 52. The storage apparatus 56 is, for example, a memory and stores a database 76, guidance screen data 78, and the like. The database 76 includes information that is needed by the image analyzing apparatus 50 to perform an image analyzing process, e.g., an authentication range table (this will be described hereinafter) and registered feature data to be used for biometric authentication. Guidance screen data 78 is screen data that includes an instruction for guiding the position of a subject. The storage apparatus 56 may store a program for controlling operations of the image analyzing apparatus 50. While the image analyzing apparatus 50 is performing various types of processing, the storage apparatus 56 may be used as a work space, e.g., an image buffer, on an as-needed basis.

The processing apparatus 60 is, for example, an arithmetic processing apparatus (processor) that performs various types of processing for the image analyzing apparatus 50. The processing apparatus 60 may read and execute a control program stored in advance in, for example, the storage apparatus 56, so as to perform various types of processing for the image analyzing apparatus 50. In this case, the processing apparatus 60 achieves functions as a management unit 62, a feature extracting unit 64, a collation unit 66, an estimating unit 68, an establishing unit 70, a guidance unit 72, and a display controlling unit 74. Alternatively, the image analyzing apparatus 50 may include an integrated circuit corresponding to some of or all of the functions achieved by the processing apparatus 60.

The management unit 62 performs a process of summarizing the entirety of a biometric authentication process performed by the image analyzing apparatus 50. The feature extracting unit 64 extracts a biometric feature to be used for authentication from an image shot by the camera 54. The collation unit 66 performs a collation process. In particular, using registered feature data extracted by the feature extracting unit 64, the collation unit 66 outputs a similarity level that indicates the degree of similarity between the registered feature data and input data.

The estimating unit 68 performs a process of obtaining a three-dimensional shape of a subject. The estimating unit 68 estimates the shape and position of a subject whose image has been shot by the camera 54. In particular, the estimating unit 68 obtains a three-dimensional shape of the subject by performing a Shape From Shading (SFS) process or the like. For example, as the SFS process, a process may be used in which brightness is measured for each of a plurality of positions on the subject, and, for each of the plurality of positions, the distance from the position to a light source is calculated to obtain the three-dimensional shape of the subject.

The establishing unit 70 calculates a visually checkable region estimated to be able to be seen by the user according to the three-dimensional shape of the subject, and establishes a display region for an instruction. In particular, the establishing unit 70 establishes a display region on the display 52 according to the shape and position of the subject. According to the calculated three-dimensional shape (shape and position) of the subject, the guidance unit 72 calculates a guidance direction in which the subject is to be guided. The display controlling unit 74 performs a process of displaying an instruction based on the calculated guidance direction on the display region established by the establishing unit 70.

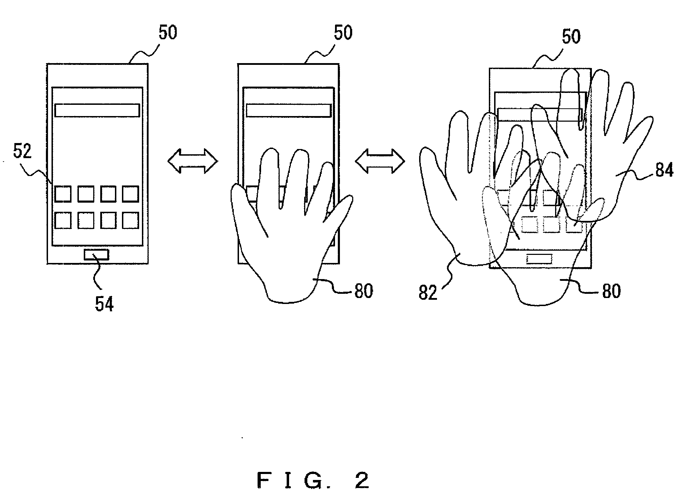

FIG. 2 illustrates an example of the conducting of palm vein authentication using an image analyzing apparatus 50 in the form of, for example, a tablet terminal apparatus or a multifunctional portable telephone (both of which may hereinafter be referred to as a multifunctional portable telephone). When authentication is conducted using a palm vein authenticating apparatus installed on a multifunctional portable telephone or the like, a displayed item could be hidden from view by a palm. As indicated by a hand 80 in FIG. 2, the display 52 of the image analyzing apparatus 50 may be partly hidden from view. Portions of the display 52 that are hidden from view by a hand 82 or 84 depend on the size and/or position of the hand. However, hiding a portion of the display 52 from view makes it difficult to properly give a user a guidance instruction for guiding a proper position and/or height of the hand, thereby decreasing the usability. This is a problem caused by small devices, although such a problem seldom occurs in notebook-sized personal computers or large-sized tablet terminals.

In the case of a multifunctional portable telephone or the like, when the body rotates in a horizontal or vertical direction, the screen also rotates in a horizontal or vertical direction in response to an acceleration sensor. As a result, in an attempt to hold the user's hand over a camera 54 that serves as a palm vein authentication sensor, the user may cover a wrong portion. In such a case, in giving a guidance instruction, the screen may be hidden from view by the hand.

In particular, since palm vein authentication is noncontact authentication, the position and height of a hand is not necessarily fixed. In addition, as every individual's hands are differently sized and shaped, it is difficult to determine a unique position where a User Interface (UI) screen for guidance instructions, instruction inputs, and the like (this screen may hereinafter be referred to as a guidance screen) is to be displayed.

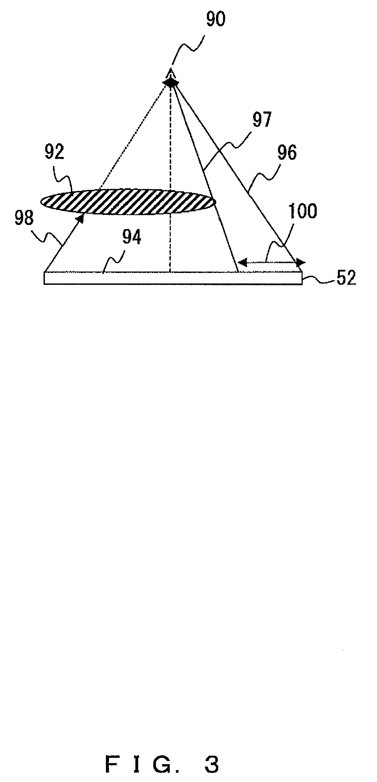

FIG. 3 illustrates an example of a visually checkable region in accordance with a first embodiment. As illustrated in FIG. 3, an eye 90 is on, for example, a straight line extending vertically from the center of the display 52. In such a situation, a three-dimensional image of a subject 92 is estimated according to a shot image. The eye 90 visually checks a screen 94 of the display 52 for a region extending from a boundary 98 to a boundary 96. In FIG. 3, the portion of the screen 94 that is located to the left of a boundary 97, which is located to the right of the subject 92, is hidden from view by the subject 92 and is thus unable to be visually checked. Accordingly, in the example of FIG. 3, a visually checkable region 100 represents the range of the screen 94 that can be visually checked by the eye 90. As described above, the shape of the subject 92 is obtained through, for example, the SFS process. As described above, it is determined whether the eye 90 can visually check a plurality of points on the screen 94.

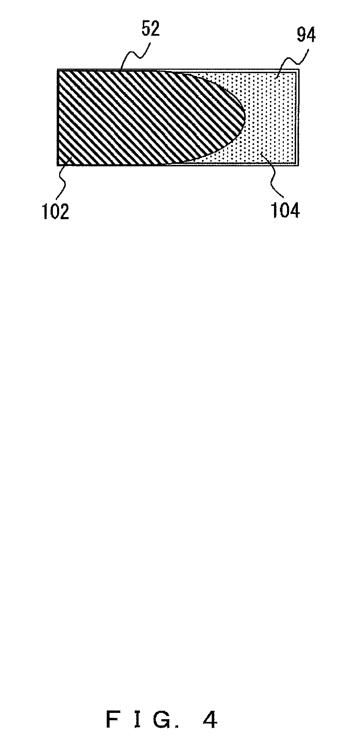

FIG. 4 illustrates another example of a visually checkable region in accordance with the first embodiment. As depicted in FIG. 4, it is determined whether the eye 90 can visually check a region on the screen 94 of the display 52 according to an estimated shape of the subject 92 and the position of the eye 90. In particular, it is determined whether a subject 92 is present on a line linking a point on the screen 94 of the display 52 and the eye 90 of the user. A region covered by the subject 92 is unable to be seen by the user and is thus defined as a visually uncheckable region 102. Meanwhile, a region that is not covered by the subject 92 can be seen by the user and is thus judged to be a visually checkable region 104. In a guidance process, the image analyzing apparatus 50 displays a guidance screen on the visually checkable region 104. The determination of a visually checkable region will be described hereinafter.

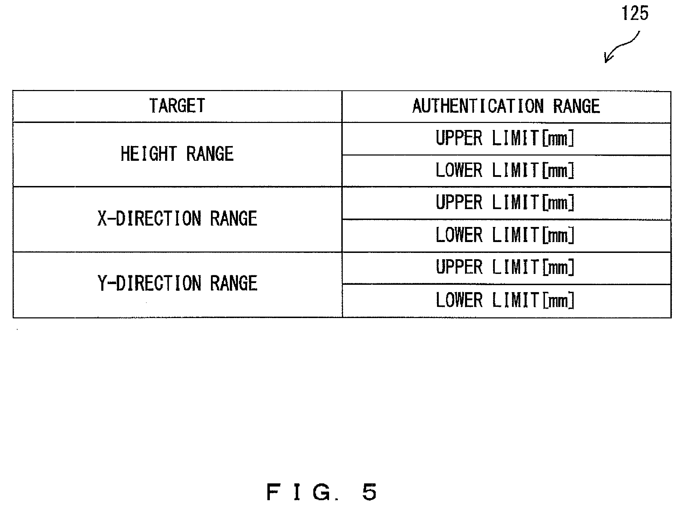

FIG. 5 illustrates an example of an authentication range table 125 that indicates a predetermined authentication range in accordance with the first embodiment. The authentication range table 125 is information indicating, in conformity with the performance of the image analyzing apparatus 50 for biometric authentication, a preferable three-dimensional range in which a subject is present. The authentication range table 125 includes a "height range", "X-direction range", and "Y-direction range". The height is, for example, a distance from the screen of the display 52 to a subject. The X direction and the Y direction are, for example, two-dimensional directions on a plane parallel to the display 52. For each of the three-dimensional directions, a range is indicated in which a subject is present. For example, biometric authentication may be conducted when a subject is present within a range indicated by the authentication range table 125.

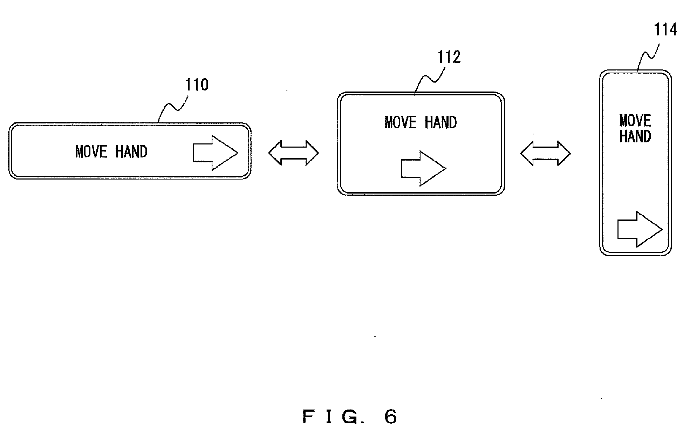

FIG. 6 illustrates an example of a guidance screen in accordance with the first embodiment. The shape of the visually checkable region 104, which is determined in the manner described above, may possibly change due to various conditions. Accordingly, a plurality of layouts are preferably prepared for the guidance screen. The patterns are stored in the storage apparatus 56 as guidance screen data 78. Three patterns, e.g. , a guidance display item 110 for a horizontal visually checkable region, a guidance display item 112 for a square visually checkable region, and a guidance display item 114 for a vertical visually checkable region, may be prepared for selection. In particular, a plurality of templates that depend on the type of guidance (e.g. , direction of movement) and the size and shape of a visually checkable region are preferably saved. When, for example, a three-dimensional position of a subject calculated by referring to the authentication range table 125 is different from a region recorded in the authentication range table 125, a predetermined item may be displayed to guide the subject into a preferable range. It is also preferable to properly change a position at which the guidance screen is displayed. For example, the guidance screen may be displayed on a visually checkable region that is as large as possible. The guidance screen may be displayed on a visually checkable region that is as distant as possible from the camera 54.

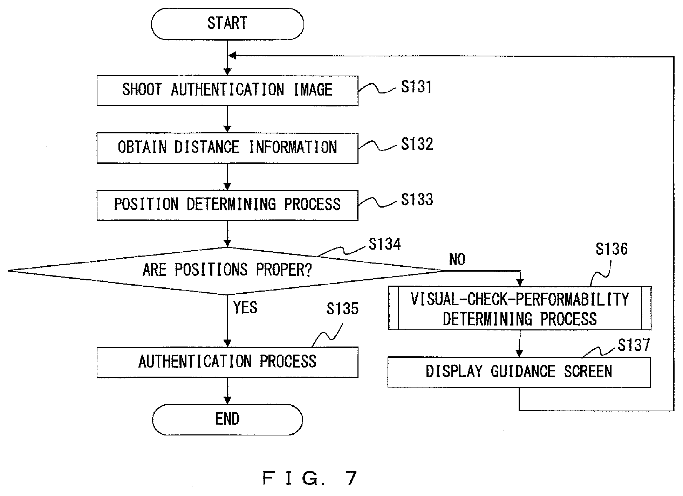

FIG. 7 is a flowchart illustrating a biometric authentication method that relies on the image analyzing apparatus 50 in accordance with the first embodiment. As depicted in FIG. 7, the management unit 62 of the image analyzing apparatus 50 causes the camera 54 to illuminate a biometric subject, e.g., a palm, and to shoot an authentication image (S131). An authentication image is an image to be used for an authentication process; in the case of palm vein authentication, a palm image corresponds to an authentication image.

The management unit 62 obtains distance information (S132). Distance information is obtained by calculating a subject distance through the SFS process or the like according to the authentication image. For example, it may be preferable to use the average of the distances to points on the subject that are calculated through the SFS process or the like.

The management unit 62 performs a position determining process (S133). The position determining process is a process of determining whether the positions of the subject in the vertical and horizontal directions are within a predetermined range. The positions in the vertical and horizontal directions are desirably determined according to, for example, the position of the barycentric coordinates of the subject. Distance information may be calculated according to a distance sensor installed on a sensor. Such a configuration increases the cost to fabricate the apparatus but improves the precision.

When the positions are proper (S134: YES), the management unit 62 performs an authentication process (S135). The authentication process is, for example, a palm vein authentication process. The management unit 62 conducts authentication according to an image shot by the camera 54 and registered feature data from the database 76 stored in the storage apparatus 56.

When the positions are improper (S134 : NO), the establishing unit 70 performs a visual-check-performability determining process (S136), displays, for example, a guidance screen to move the position of the subject (S137), and returns to S131 so as to repeat the processes.

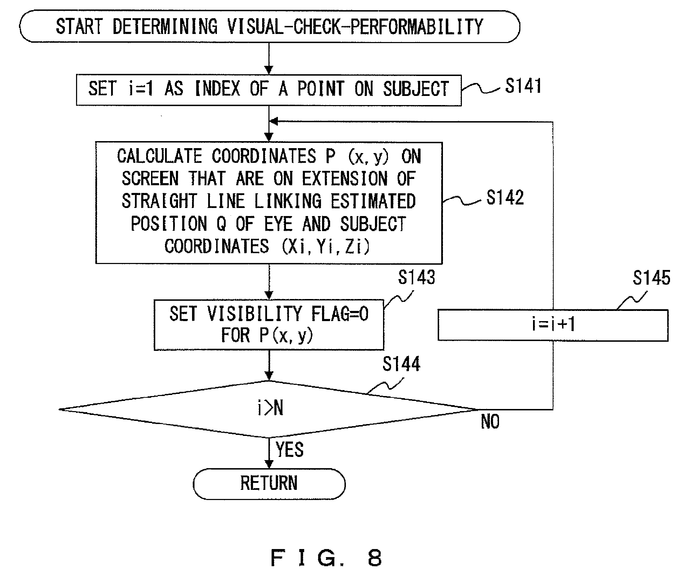

FIG. 8 is a flowchart illustrating a visual-check-performability determining process in accordance with the first embodiment. In the visual-check-performability determining process, the management unit 62 sets i=1 as an index of a point on a subject whose image has been shot using the camera 54 (S141). Points on the subject maybe arbitrarily determined, e.g., such points may be determined at intervals of a predetermined distance. The management unit 62 calculates coordinates P (X, Y) on the screen that are on an extension of a straight line linking an estimated position Q of the eye 90 and subject coordinates (S142).

The following will describe a visually-checkable-region calculating process. The establishing unit 70 outputs a visually checkable region using, as inputs, three-dimensional data (Xi, Yi, Zi) (i=1, ..., N) of the subject obtained from the estimating unit 68 and an estimated position Q (Xe, Ye, Ze) of the eye 90 of the user. In this example, X, Y, and Z represent, for example, three-dimensional coordinates whose origin is the center of the screen 94.

First, descriptions will be given of three-dimensional data Oi (Xi, Yi, Zi) of a subject obtained from a three-dimensional-shape obtaining unit. (Xi, Yi, Zi) represent an i-th data point of the subject in the three-dimensional coordinates that is obtained through the SFS process or the like. In this example, i=1, ..., N each indicate a number assigned to obtained three-dimensional information.

The estimating unit 68 determines whether the user can see a point (x, y) on the screen, and sets a visibility flag (S143). x and y represent coordinates on the screen, and the unit of measurement is preferably changed from pixel to length (mm). The estimating unit 68 determines a point P (x, y) on the screen that is present on an extension of a straight line linking the position Q of the user's eye (Xe, Ye, Ze) and the subject (Xi, Yi, Zi) (S142). When it is determined that the point (x, y) is covered by the subject and is unable to be seen by the user, visibility flag=0 is set for the point P (x, y).

The following will describe a process of determining whether a subject is present between points P and Q. A straight line 1 linking an estimated position Q of the user's eye (Xe, Ye, Ze) and a subject Oi (Xi, Yi, Zi) is determined within a three-dimensional coordinate system X, Y, Z. The straight line 1 may be determined using a parameter t, as expressed by formula 1.

$$X=Xe+(Xi-Xe)t$$
$$Y=Ye+(Yi-Ye)t$$
$$Z=Ze+(Zi-Ze)t$$
$$\cdots \quad (Formula\ 1)$$

Next, the point P (x, y), which is the intercept of the straight line 1 and the screen 94, is determined. As the Z coordinates on the screen satisfy Z=0, the parameter t may be determined in accordance with formula 1, as expressed by formula 2.

$$t=Ze/(Ze-Zi) \quad \cdots \quad (Formula\ 2)$$

By substituting the parameter t into formula 1, the point P (x, y) on the screen may be determined. When, for example, the point P (x, y) is within the range of the screen 94 (presence of the P (x, y) on the screen 94 depends on the size of the screen 94), it is determined that the point P (x, y) is covered by a subject and is not seen by the user (visually uncheckable). In this case, visibility flag=0 is set for the point P (x, y).

When i≤N (S144: NO), the establishing unit 70 sets i=i+1 (S145) and repeats the processes again starting from S141. When i>N (S144: YES), the establishing unit 70 ends the visual-check-performability determining process. Through applying such a process to all preset points on the subject, a visually checkable region is calculated. Displaying the guidance display item 110 described with reference to FIG. 6 within the calculated visually checkable region allows the screen to be visually checked without being covered by the subject.

Next, descriptions will be given of a process of displaying a guidance screen in accordance with a calculated visually checkable region. The guidance unit 72 performs a guidance screen displaying process in which guidance screen data 78 stored in the storage apparatus 56 is used. For example, guidance screen data 78 may preferably include a guidance screen corresponding to "guidance patterns" that depend on details of guidance. For example, the guidance patterns may preferably include the following.

• Guide the hand downward
• Guide the hand upward
• Guide the hand rightward
• Guide the hand leftward
• Guide the hand downward (in a direction in which the hand approaches the screen)
• Guide the hand upward (in a direction in which the hand moves away from the screen)

With reference to the first embodiment, FIG. 6 depicts the guidance screen for three patterns each with a difference aspect ratio. In, for example, the guiding of the hand rightward, it is preferable that the three screen patterns depicted in FIG. 6 be prepared so as to use a proper image from among those patterns.

For example, the guidance unit 72 may determine an aspect ratio for a calculated visually checkable region and select and display a guidance screen whose aspect ratio is the closest to the determined aspect ratio. The size of the entirety of the guidance screen is adjusted in accordance with the area of the visually checkable region. For example, the guidance unit 72 may label the visually checkable region so as to remove small regions and then determine a widest region S. The guidance unit 72 determines the length and width of the widest region S and, in accordance with the ratio therebetween, selects a proper image from, for example, the three patterns depicted in FIG. 6.

When, for example, the visually checkable region is sufficiently large, guidance may be given using characters such as those depicted in FIG. 6 (e.g., "Move your hand way") together with an object such as an arrow. Meanwhile, when the visually checkable region is small, it is difficult to display characters, and a limited display region may be effectively used by displaying only intuitive guidance such as an arrow.

As described above, the image analyzing apparatus 50 in accordance with the first embodiment includes the display 52, the camera 54, the estimating unit 68, the establishing unit 70, the guidance unit 72, and the display controlling unit 74. The camera 54 shoots an image of a subject located in front of the display 52. The estimating unit 68 estimates the shape and position of the subject whose image has been shot by the camera 54. The establishing unit 70 establishes a display region on the display 52 according to the shape and position of the subject. The guidance unit 72 calculates a guidance direction for the subject according to the shape and position thereof. The display controlling unit 74 displays on the display region a guidance instruction that depends on the guidance direction.

When the image analyzing apparatus 50 is used as, for example, a palm vein authentication apparatus, the image analyzing apparatus 50 may be mounted on a small device such as a multifunctional portable telephone. When a small device is used as the image analyzing apparatus 50 like this, items are also displayed at positions on the screen that are not covered by a subject so that an instruction based on image analysis can be reliably given to the user, thereby improving the usability. A small device that allows biometric authentication with a high usability can serve as remarkably effective means for personal authentication. In particular, such a device is expected to be valued for use in various fields that require security measures.

In the case of a multifunctional portable telephone or the like, the screen also rotates in a horizontal or vertical direction in response to an acceleration sensor, with the result that the user may possibly hold her/his hand over a wrong position in an attempt to hold it over the position of the palm vein authentication sensor. When guidance is given in such a situation, the screen is prevented from being hidden from view by the hand. In particular, even though the position and height of a hand are not necessarily fixed because palm vein authentication is noncontact authentication, and even though every individual's hands are differently sized and shaped, the guidance screen can be displayed at a position that can be visually checked.

(Second Embodiment)

The following will describe an image analyzing apparatus 200 in accordance with a second embodiment. With reference to the second embodiment, like components and operations are given like reference marks to those used with reference to the first embodiment, and overlapping descriptions are not given herein.

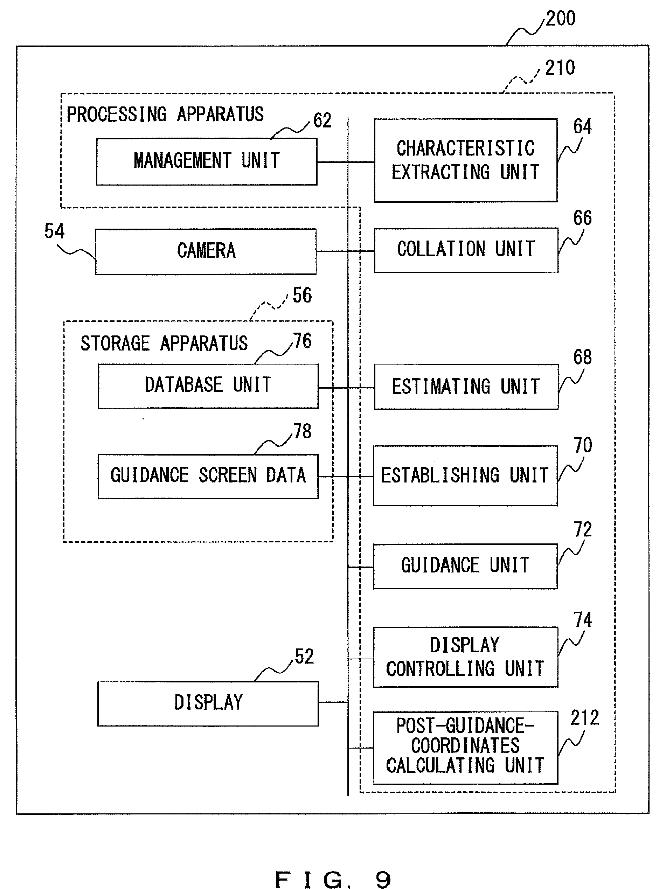

FIG. 9 illustrates an exemplary configuration of the image analyzing apparatus 200 in accordance with the second embodiment. As depicted in FIG. 9, the image analyzing apparatus 200 includes a display 52, a camera 54, a processing apparatus 210, and a storage apparatus 56. The image analyzing apparatus 200 includes a function that serves as a biometric authentication apparatus. For example, a portable information terminal apparatus, a multifunctional portable telephone, or the like may be used as the image analyzing apparatus 200. In this case, the image analyzing apparatus 200 is equipped with a communication function or the like, and the function for allowing the image analyzing apparatus 50 to serve as a biometric authentication apparatus is illustrated.

The processing apparatus 210 is an arithmetic processing apparatus that performs various types of processing for the image analyzing apparatus 200. The processing apparatus 210 may read and execute a control program stored in advance in, for example, the storage apparatus 56, so as to perform various types of processing as the image analyzing apparatus 200. In this case, as in the image analyzing apparatus 50 in accordance with the first embodiment, the processing apparatus 210 achieves functions as a management unit 62, a feature extracting unit 64, a collation unit 66, an estimating unit 68, an establishing unit 70, a guidance unit 72, and a display controlling unit 74. In addition, the processing apparatus 210 achieves a function as a post-guidance-coordinates calculating unit 212. Alternatively, the image analyzing apparatus 200 may include an integrated circuit corresponding to some of or all of the functions achieved by the processing apparatus 60. The post-guidance-coordinates calculating unit 212 calculates coordinates of a subject after guidance. In the second embodiment, the image analyzing apparatus 200 calculates a post-guidance visually checkable region that is preferably used for the displaying of a guidance screen.

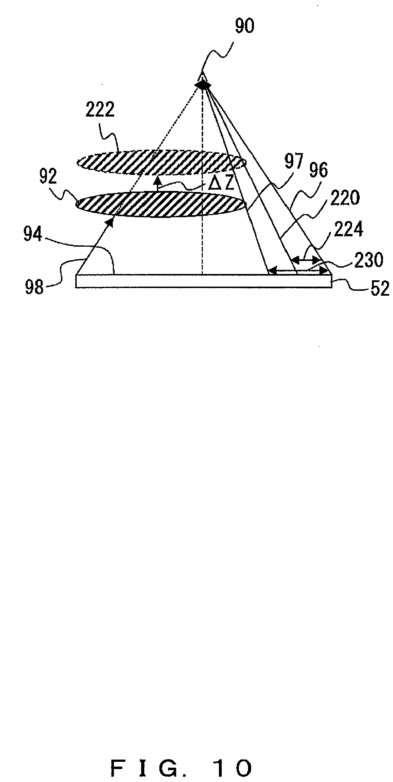

FIG. 10 illustrates an example of calculation of a visually checkable region after guidance in accordance with the second embodiment. As illustrated in FIG. 10, the position relationship between the display 52 and the eye 90 is similar to that depicted in the example of FIG. 4. When the position of the subject 92 is judged to be improper, the subject 92 is preferably guided to, for example, the position of a post-guidance subject 222. In this case, it is preferable that the image analyzing apparatus 200 determine a region where the current visually checkable region 100 and a post-guidance visually checkable region 224 overlap one another, and display a guidance screen within the determined region. Displaying a guidance screen within a region that the user can see after the subject is guided enables the guidance screen to always be seen even during the process of giving guidance.

It is preferable that the image analyzing apparatus 200 predict the position of the subject after guidance to the position of the post-guidance subject 222, and determine the post-guidance visually checkable region 224. When the post-guidance visually checkable region 224 is sufficiently large, guidance may be given using characters such as those depicted in FIG. 6 (e.g., "Move your hand way") together with an object such as an arrow. Meanwhile, when the visually checkable region is small, it is difficult to display characters, and a limited display region may be effectively used by displaying only intuitive guidance such as an arrow.

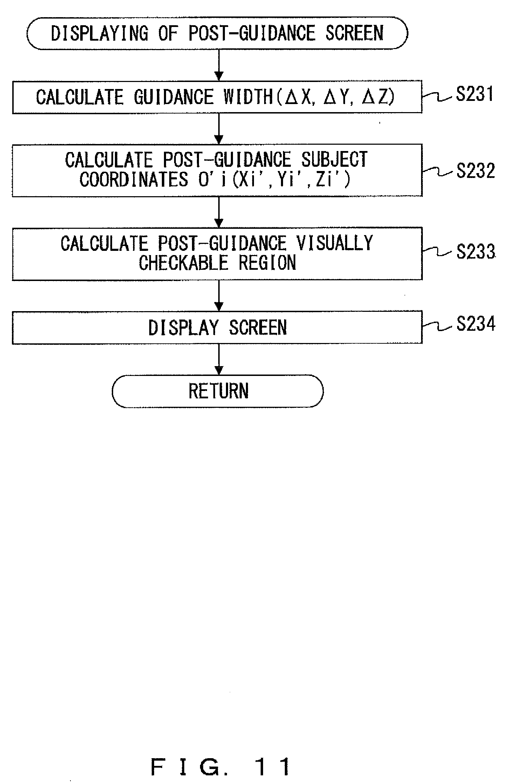

The following describes an example of calculation of a post-guidance visually checkable region and an example of a guidance screen. FIG. 11 is a flowchart illustrating an example of a post-guidance screen displaying process in accordance with the second embodiment. The post-guidance-coordinates calculating unit 212 calculates a guidance width (S231). A guidance width is a calculated amount of guidance based on three-dimensional information of a subject whose image has been shot. In giving guidance for height=Z, $\Delta Z$ is determined according to formula 3.

$$\Delta Z = (\text{average of current subject coordinates Zi}) - (\text{height Z after guidance}) \cdots (\text{Formula 3})$$

The height Z after guidance may be, for example, a value that is the closest to the current height within the predetermined authentication range indicated by the authentication range table 125 in FIG. 5. Guidance widths based on the X coordinate and Y coordinate may be determined in a similar manner. In particular, the guidance widths may be calculated in a manner such that the center of the subject (e.g., the center of the palm) matches the center of the screen after guidance is given.

The post-guidance-coordinates calculating unit 212 calculates post-guidance subject coordinates O'i (Xi', Yi', Zi') according to subject coordinates before guidance and a calculated guidance width (S232). The post-guidance-coordinates calculating unit 212 calculates a post-guidance visually checkable region from the post-guidance subject coordinates (S233). The post-guidance-coordinates calculating unit 212 determines a region where the post-guidance visually checkable region calculated from the post-guidance subject coordinates and a current visually checkable region overlap each other, and displays a guidance screen in the determined region (S234). In this way, when a subject needs to be guided to a proper position, the image analyzing apparatus 200 displays a guidance screen at a position that would not be covered by the subject after guidance. Accordingly, the guidance screen to be seen by the user would not be covered even during the guidance process, thereby improving the usability. The process of displaying the guidance screen in accordance with a calculated post-guidance visually checkable region is similar to that in the first embodiment.

As described above, the image analyzing apparatus 200 in accordance with the second embodiment displays the guidance screen on a region common to a visually checkable region before guidance a subject and a visually checkable region after guidance the subject. In this way, the image analyzing apparatus 200 is capable of properly determining a position at which the guidance screen is to be displayed. Since the guidance screen is displayed at a proper position, the user can always visually check the guidance screen while moving a subject, and this improves the usability.

The present invention is not limited to the embodiments described above and may have various configurations or embodiments without departing from the spirit of the invention. In, for example, the first and second embodiments described above, a predetermined value is used as a standard value for the estimated position Q (Xe, Ye, Ze) for the eye 90 of the user; however, in fact, the standard value is assumed to be different for each user. Hence, Q (Xe, Ye, Ze) may be set individually for each user. This allows a position for displaying the guidance screen to be selected to conform to more realistic situations.

For the guidance screen, a plurality of screens with different aspect ratios are prepared and scaled, but the invention is not limited to this. For example, it may be preferable to properly switch displayed information according to the size of the guidance screen. When, for example, characters are displayed on the guidance screen, the user is unable to see the characters if the screen is downsized to a certain degree or greater. Accordingly, depending on the size of the guidance screen to be displayed, the guidance screen may be switched. In particular, both characters and images are displayed on the guidance screen with a sufficiently large visually checkable region. However, only images (e.g., arrow "→") may be displayed on the guidance screen with an insufficiently large display region without displaying a character. Such configurations improve the usability.

Besides the SFS process, various schemes, e.g., a laser-based optical cutting method or a scheme that uses spotlighting instruments arranged in a lattice pattern, may be used. When a plurality of visually checkable regions are present, it is preferable that a region on the screen 94 that is as far away from the camera 54 as possible be preferentially selected. Such a selection may decrease the likelihood of the guidance screen being covered by a subject.

## Claims

1. An image analyzing apparatus(50) comprising:

   a display(52);
   a camera(54) that shoots an image of a subject located in front of the display(52);
   an estimating unit(68) that estimates a shape of the subject whose image has been shot by the camera(54);
   an establishing unit(70) that establishes a display region on the display (52) according to the shape of the subject;
   a guidance unit (72) that calculates a guidance direction for the subject according to the shape of the subject; and
   a display control unit(74) that displays on the display region a guidance instruction that is based on the guidance direction.

2. The image analyzing apparatus(50) according to claim 1, wherein

the establishing unit(70) changes the display region according to the guidance direction calculated by the guidance unit(72).

3. The image analyzing apparatus(50) according to claim 1 or 2, wherein
the establishing unit(70) preferentially establishes a display region that is distant from the camera(54).

4. An image analyzing method comprising:

estimating, by an image analyzing apparatus (50), a shape of a subject that is located in front of a display (52) and whose image has been shot by a camera(54);
establishing, by the image analyzing apparatus(50), a display region on the display (52) according to the shape of the subject;
calculating, by the image analyzing apparatus(50), a guidance direction for the subject according to the shape of the subject; and
displaying, by the image analyzing apparatus(50) and on the display region, a guidance instruction that is based on the guidance direction.

5. A program for causing a computer to execute a process comprising:

estimating a shape of a subject that is located in front of a display(52) and whose image has been shot by a camera (54) ;
establishing a display region on the display(52) according to the shape of the subject;
calculating a guidance direction for the subject according to the shape of the subject; and
displaying on the display region a guidance instruction that is based on the guidance direction.

F I G. 1

F I G. 2

F I G. 3

F I G. 4

125

| TARGET | AUTHENTICATION RANGE | |
|---|---|---|
| HEIGHT RANGE | UPPER LIMIT [mm] | |
| | LOWER LIMIT [mm] | |
| X-DIRECTION RANGE | UPPER LIMIT [mm] | |
| | LOWER LIMIT [mm] | |
| Y-DIRECTION RANGE | UPPER LIMIT [mm] | |
| | LOWER LIMIT [mm] | |

# F I G. 5

110

MOVE HAND ⇨

⟺

112

MOVE HAND

⇨

⟺

114

MOVE
HAND

⇨

F I G. 6

START

SHOOT AUTHENTICATION IMAGE — S131

OBTAIN DISTANCE INFORMATION — S132

POSITION DETERMINING PROCESS — S133

S134
ARE POSITIONS PROPER? — NO

YES — S135

S136
VISUAL-CHECK-PERFORMABILITY DETERMINING PROCESS

AUTHENTICATION PROCESS

S137
DISPLAY GUIDANCE SCREEN

END

F I G. 7

START DETERMINING VISUAL-CHECK-PERFORMABILITY

SET i=1 AS INDEX OF A POINT ON SUBJECT — S141

CALCULATE COORDINATES P (x, y) ON
SCREEN THAT ARE ON EXTENSION OF
STRAIGHT LINE LINKING ESTIMATED
POSITION Q OF EYE AND SUBJECT
COORDINATES (Xi, Yi, Zi) — S142

S143
SET VISIBILITY FLAG=0
FOR P(x, y)

S145
i=i+1

S144
i>N

NO

YES

RETURN

F I G. 8

/200

/210

PROCESSING APPARATUS

/62
MANAGEMENT UNIT

64
CHARACTERISTIC EXTRACTING UNIT

54
CAMERA

66
COLLATION UNIT

/56
STORAGE APPARATUS

/76
DATABASE UNIT

68
ESTIMATING UNIT

/78
GUIDANCE SCREEN DATA

70
ESTABLISHING UNIT

72
GUIDANCE UNIT

74
DISPLAY CONTROLLING UNIT

/52
DISPLAY

212
POST-GUIDANCE-COORDINATES CALCULATING UNIT

F I G. 9

F I G. 1 0

DISPLAYING OF POST-GUIDANCE SCREEN

CALCULATE GUIDANCE WIDTH($\Delta X$, $\Delta Y$, $\Delta Z$) — S231

CALCULATE POST-GUIDANCE SUBJECT COORDINATES $O'i(Xi', Yi', Zi')$ — S232

CALCULATE POST-GUIDANCE VISUALLY CHECKABLE REGION — S233

DISPLAY SCREEN — S234

RETURN

F I G. 1 1

Europäisches
Patentamt

European
Patent Office

Office européen
des brevets

## EUROPEAN SEARCH REPORT

Application Number

EP 16 15 7817

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/243264 A1 (AOKI TAKAHIRO [JP]) 19 September 2013 (2013-09-19) * paragraphs [0034] - [0050] * * paragraphs [0104] - [0117] * * figures 1,21-23 * | 1-5 | INV. G06K9/00 ADD. G06T7/00 |
| Y | US 2014/282269 A1 (STRUTT GUENAEL THOMAS [US] ET AL) 18 September 2014 (2014-09-18) * abstract * * paragraphs [0023], [0032], [0035] * * figures 6a,6b * | 1-5 | |
| A | CN 103 870 812 A (SHANGHAI YUNXIANG SCIENCE AND TECHNOLOGY CO LTD) 18 June 2014 (2014-06-18) * the whole document * | 1-5 | |
| A | US 2009/034843 A1 (WITTKAMPER DOLF [NL] ET AL) 5 February 2009 (2009-02-05) * paragraphs [0039], [0046] * * figure 7 * | 1-5 | |

TECHNICAL FIELDS
SEARCHED (IPC)

G06K
G06F
G06T

The present search report has been drawn up for all claims

| Place of search | Date of completion of the search | Examiner |
|---|---|---|
| The Hague | 22 July 2016 | Hermes, Lothar |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 15 7817

This annex lists the patent family members relating to the patent documents cited in  the above-mentioned European search report.
The members are as contained in the European Patent Office EDP file on
The European Patent Office is in no way liable for these particulars which are merely given for the purpose of information.

22-07-2016

| Patent document cited in search report | | Publication date | Patent family member(s) | | Publication date |
|---|---|---|---|---|---|
| US 2013243264 | A1 | 19-09-2013 | JP 5747916 B2 <br> US 2013243264 A1 <br> WO 2012014304 A1 | | 15-07-2015 <br> 19-09-2013 <br> 02-02-2012 |
| US 2014282269 | A1 | 18-09-2014 | EP 2972727 A1 <br> US 2014282269 A1 <br> WO 2014164235 A1 | | 20-01-2016 <br> 18-09-2014 <br> 09-10-2014 |
| CN 103870812 | A | 18-06-2014 | NONE | | |
| US 2009034843 | A1 | 05-02-2009 | CN 101243683 A <br> EP 1922865 A2 <br> JP 2009505263 A <br> US 2009034843 A1 <br> WO 2007020546 A2 | | 13-08-2008 <br> 21-05-2008 <br> 05-02-2009 <br> 05-02-2009 <br> 22-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011228913 A
- JP 2013222322 A